# FASCICULE DE BREVET EUROPEEN

(11) **EP 1 110 173 B1**
(45) Date de publication et mention de la délivrance du brevet: **26.11.2003**
(21) Numéro de dépôt: 99940280.3
(22) Date de dépôt: 02.09.1999
(51) Int. Cl.: G06K 19/07

(54) **PROCEDE DE TRANSMISSION DE DONNEES ET CARTE POUR UNE TELLE TRANSMISSION**
VERFAHREN ZUR DATENÜBERTRAGUNG UND KARTE FÜR EINE SOLCHE ÜBERTRAGUNG
DATA TRANSMISSION METHOD AND CARD THEREFOR

(30) Priorité: 11.09.1998 FR 9811374
(43) Date de publication de la demande: 27.06.2001
(73) Titulaire: SCHLUMBERGER Systèmes, 92120 Montrouge (FR)
(72) Inventeur: RHELIMI, Alain, F-94230 Cachan (FR)
(74) Mandataire: den Braber, Gerard Paul
(86) Numéro de dépôt international: FR9902095
(87) Numéro de publication internationale: WO00016255

(56) Documents cités:
- EP-A- 0 883 083
- WO-A-98/29830
- WO-A-99/49415
- US-A- 5 161 992
- US-A- 5 420 412
- Universal Serial Bus Specification Version 1.0, 19.01.1996, page 29
- U. Tietze, Ch. Schenk: Halbleitertechnik, Springer-Verlag 1991, ISBN 3-540-19475-4, p. 223

## Description

L'invention a trait à des objets portatifs du type carte à puce comprenant, d'une part, un corps d'objet et, d'autre part, une puce à circuits intégrés.

Les cartes à puce sont des objets normalisés décrits notamment dans la norme ISO 7816 qui ont pour principale fonction de permettre des transactions électroniques en identifiant leur titulaire. A cet effet, les cartes à puce comportent une puce dont des circuits, intégrés sur un substrat silicium, définissent différents éléments fonctionnels et notamment une unité centrale de traitement (CPU) ainsi que des mémoires volatiles (RAM), non volatile (ROM) et non volatiles programmables et effaçables électriquement (EEPROM). L'unité centrale (CPU) assure la gestion de données et adresses entre les différentes mémoires par l'intermédiaire de bus. Les données et adresses sont en général codées respectivement sur 8 et 16 bits.

Les puces à circuits intégrés sont munies de six plots de contact : les plots VCC, GND, VPP, RST, CLK et I/O, qui ont respectivement pour fonction d'assurer l'alimentation de la puce en courant électrique, sa mise à la masse, son alimentation en tension de programmation, sa réinitialisation, l'entrée d'un signal d'horloge et l'entrée et la sortie des données. Ces plots sont connectés électriquement à des plages de contact affleurantes à la surface de la carte. Le plot VCC est connecté à une plage C1, le plot GND à une plage C5, le plot VPP à une plage C6, le plot RST à une plage C2, le plot CLK à une plage C3 et le plot I/O à une plage C7.

La partie 2 de la norme précitée ISO 7816 a pour objet le nombre, la dimension et le positionnement des plages de contact électrique de la carte. Ainsi que cela est défini dans cette norme, outre les plages C1, C5, C6, C2, C3 et C7, la carte possède deux plages C4 et C8 réservées pour une future utilisation. Aucune fonction n'est affectée à ces plages non connectées.

La partie 3 de la norme 7816 a pour objet les différents signaux et protocoles de transmission auxquels doit satisfaire la carte. Dans les protocoles appelés T=0 et T=1, les données sont transmises exclusivement via le plot I/O, en mode semi-duplex et de manière asynchrone et sous des formats définis. Les débits autorisés selon ces protocoles et formats de données sont faibles, de l'ordre de 38 kilobits par seconde et les liaisons multi-points ne sont pas autorisées.

De ce fait, lorsque qu'on veut utiliser une carte de l'état de la technique avec des terminaux non spécialisés qui n'utilisent pas les formats et protocoles précités de partie 3 de la norme 7816, c'est-à-dire en fait la majorité des terminaux disponibles sur le marché et notamment les ordinateurs personnels, il est nécessaire d'utiliser un lecteur de carte qui assure non seulement la mise hors et sous tension de la carte mais qui assure en outre une conversion de protocole et reformate des données pour les rendre utilisables par la carte. Les débits autorisés par la carte étant très faibles, celle-ci ne peut pas servir à des applications exigeant des transferts de données rapides telles que le codage/décodage d'information à la volée.

Compte tenu de ce qui précède, un problème que se propose de résoudre l'invention est de permettre à un objet portatif du type carte à puce comprenant, d'une part, un corps d'objet et, d'autre part, une puce à circuits intégrés, ladite puce à circuits intégrés comportant une unité centrale de traitement connectée, par l'intermédiaire de bus de données et d'adresses, à des mémoires, et comportant en outre au moins un premier plot de contact apte à pouvoir la puce en tension d'alimentation, un second plot de contact apte à assurer une mise à la masse de la puce, un troisième plot de contact et un quatrième plot de contact, lesdits plots de contact étant connectés électriquement, respectivement, à une première plage de contact, une seconde plage de contact, une troisième plage de contact et à une quatrième plage de contact d'un ensemble d'au moins six plages de contact affleurantes à la surface du corps d'objet, de fonctionner selon des modalités différentes de celles organisées par la partie 3 de la norme 7816 et en particulier de ne pas utiliser les protocoles T=0 et T=1 et les formats requis des données décrits dans cette norme.

Considérant le problème posé ci-dessus, la solution proposée de l'invention a pour premier objet un objet portatif tel que défini dans la revendication 1.

Par ailleurs, l'invention a pour second objet un procédé de transmission de données à une puce à circuits intégrés tel que défini dans la revendication 8.

Il convient de noter que la demande internationale publiée sous le numéro WO 99/49415 décrit une carte à puce compatible avec plusieurs différents protocols. La carte à puce comprend un ensemble de contacts conformément la norme ISO 7816 et elle comprend un autre contact non disigné par la norme. Cet autre contact est utilisé pour indiquer si la carte doit opérer selon un mode non-standard.

La demande précitée constitue un art antérieur selon l'article 54(3) CBE.

Il convient également de noter que le brevet américain numéro 5,161,992 decrit un ensemble de connecteurs pour une carte à memoire classique.

L'exposé qui va suivre, et qui ne comporte aucun caractère limitatif, permettra de mieux comprendre la manière dont l'invention peut être mise en pratique. Il doit être lu au regard des dessins annexés, dans lesquels:
- la figure 1 est un schéma d'une carte selon l'invention insérée dans une fente d'un lecteur connecté à un port d'un ordinateur personnel via un répartiteur (hub en anglo-saxon) ;
- la figure 2 montre, en perspective, une puce connectée électriquement aux plages de contact d'une carte à puce selon l'invention ;
- la figure 3 schématise les différents éléments d'une puce à circuits intégrés d'une carte selon l'invention, connectée à un lecteur de carte pour une transmission des données selon les protocoles de l'USB (Universal Serial Bus en anglo-saxon - bus série universel en français) ;
- la figure 4 schématise les différents éléments d'une puce à circuits intégrés d'une carte à puce selon l'invention, connectée à un lecteur de carte pour une transmission des données selon les protocoles de l'USB et les protocoles de la partie 3 de la norme ISO 7816 ; et
- la figure 5 schématise le mode de connexion d'une carte à un connecteur d'un lecteur selon l'invention.

Les objets portatifs selon l'invention sont du type carte à puce.

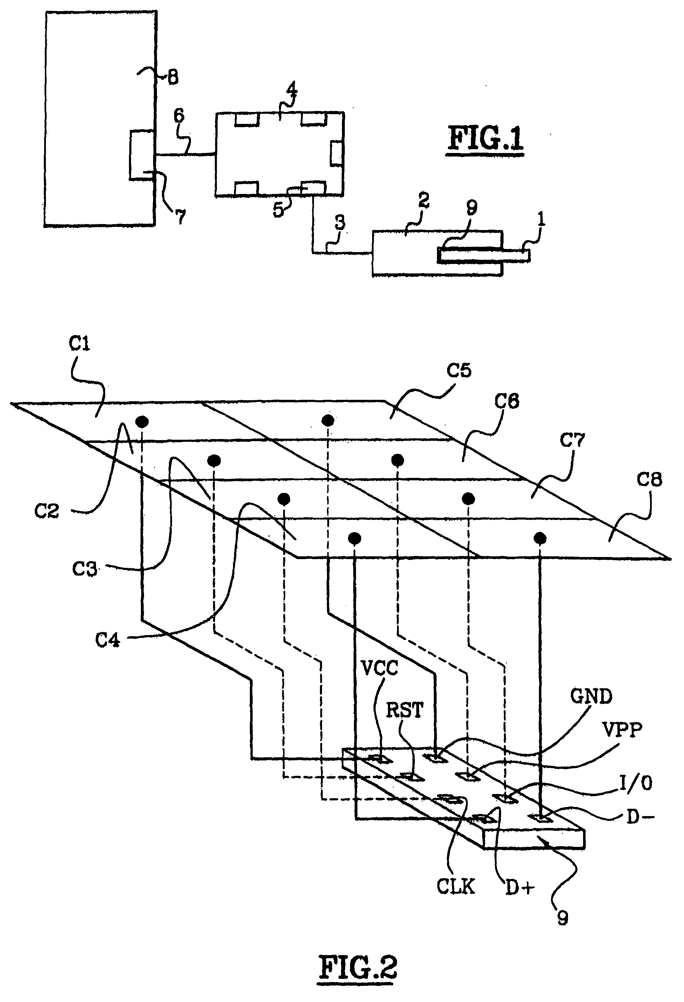

Ainsi que cela est montré à la figure 1, ces objets portatifs du type carte à puce 1 sont destinés à être insérés dans une fente d'un lecteur 2, ledit lecteur 2 étant connecté, par un câble de liaison 3, par exemple à un répartiteur 4 muni d'au moins un port 5 en particulier du type USB, ledit répartiteur 4 étant connecté, par un câble de liaison 6, à un port 7 en particulier du type USB d'une unité centrale 8.

Les cartes à puce sont des objets normalisés tels que notamment définis dans les normes ISO 7810, 7816 et 14443.

Elles se présentent sous la forme de parallélépipèdes rectangles plats dont les dimensions sont de l'ordre de 85 mm de longueur, 54 mm de largeur et 760 µm d'épaisseur et sont formées d'un corps de carte au sein duquel est intégré une puce 9.

Le corps de carte se compose d'une ou plusieurs couches thermoplastiques ou thermodurcissables.

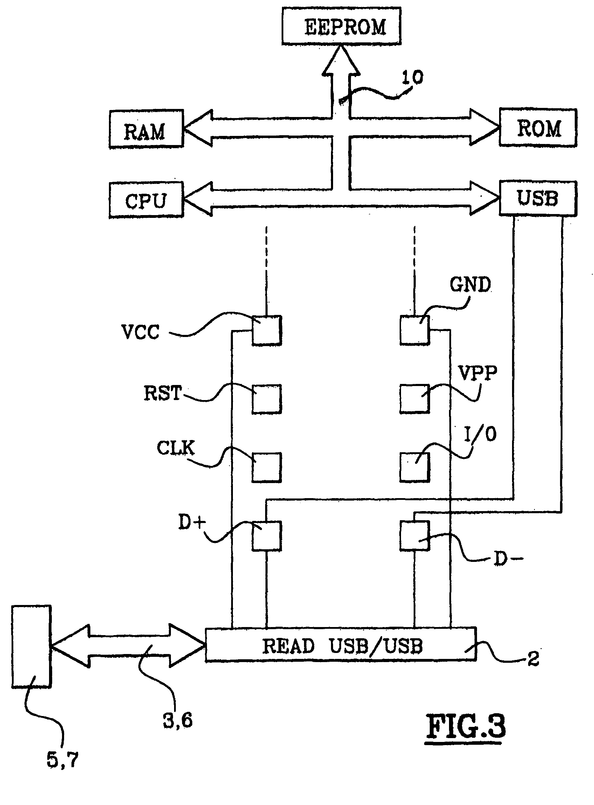

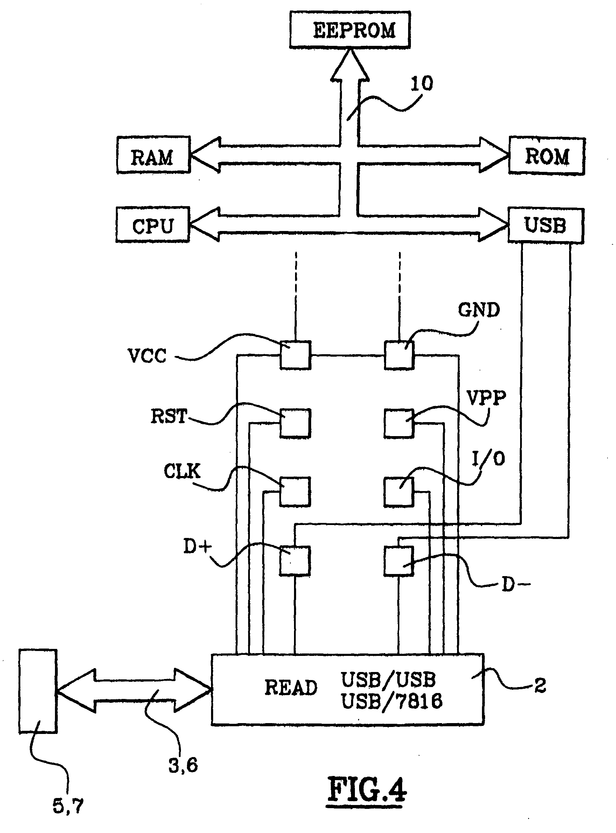

La puce 9 est une plaquette de silicium comportant des circuits intégrés dont la topologie définit différents éléments fonctionnels de la puce reliées entre eux par des lignes de bus 10 de données et d'adresses. Ainsi que cela est schématisé aux figures 3 et 4, il s'agit notamment d'une unité centrale de traitement CPU, d'une mémoire volatile RAM, d'une mémoire non volatile de programme ROM, d'une mémoire non volatile électriquement programmable et effaçable EEPROM ainsi que, selon l'invention, d'une interface particulière, notamment d'une interface USB.

La puce 9 porte au moins quatre plots de contact : un premier plot de contact VCC, un second plot de contact GND, un troisième plot de contact D+ et un quatrième plot de contact D-, lesdits troisième D+ et quatrième D- plots de contact étant reliés à l'interface USB. Par ailleurs, cette puce 9 porte en outre éventuellement un cinquième plot de contact VPP, un sixième plot de contact RST, un septième plot de contact CLK et un huitième plot de contact I/O.

Comme le montre la figure 2, les plots de contact VCC, GND, D+, D- sont connectés électriquement, respectivement, à une première plage de contact C1, une seconde plage de contact C5, une troisième plage de contact C4 et à une quatrième plage de contact C8 d'un ensemble de huit plages de contact C1, C2, C3, C4, C5, C6, C7 et C8 affleurantes à la surface du corps de carte. Eventuellement, les plots de contact VPP, RST, CLK, I/O sont connectés électriquement, respectivement, à une cinquième plage de contact C6, une sixième plage de contact C2, une septième plage de contact C3 et à une huitième plage de contact C7 de l'ensemble précité.

Les cartes selon l'invention sont aptes à communiquer avec le monde extérieur, c'est-à-dire par exemple avec un terminal tel qu'un ordinateur personnel, au moyen uniquement des plots de contact VCC qui pourvoit la puce en tension d'alimentation, GND qui assure une mise à la masse de la puce et des plots de contact D+ et D- qui assurent une transmission bidirectionnelle de données.

Lorsque la transmission des données est assurée par les plots de contact D+ et D-, le format de ces données ainsi que les protocoles utilisés sont définis dans la version 1.0 de la norme USB révisée le 15

Conformément à cette norme, les plots D+ et D- constituent une paire différentielle, les potentiels présents sur lesdits plots étant en effet opposés l'un. à l'autre. Lorsque le potentiel de D+ est supérieur-au potentiel de D-, un "1" logique est transmis et lorsque le potentiel de D-est supérieur au potentiel de D+, un "0" logique est transmis.

L'interface USB de la carte effectue un décodage des données transmises par lés plots D+ et D- et les reformate de manière que lesdites données puissent être gérées par la CPU.

La transmission des données par les plots D+ et D- selon les protocoles définis dans la norme USB comporte de multiples avantages.

Tout d'abord, le débit des données transmises peut atteindre 12 Mbits/s, ce qui est bien supérieur au débit de 38 kbits/ s des données transmises via le plot I/O et selon les protocoles et formats définis dans la norme ISO 7816.

De plus, la transmission des données s'effectue de manière synchrone en mode semi-duplex, c'est-à-dire à l'alternat, et la transmission d'un signal d'horloge par le plot CLK, bien que possible, n'est ainsi plus nécessaire. En effet, dans l'invention, l'horloge est avantageusement générée de manière interne à la carte, par exemple au moyen d'un DPLL (Digital Phase Locked Loop - en français "boucle digitale verrouillage de phase"). Selon le débit des données transmises, 1,5 Mbits/s. à basse vitesse et 12 Mbits/s à haute vitesse, la carte détermine elle-même sa vitesse de fonctionnement au moyen d'une résistance dite de polarisation (pull-up en anglo-saxon) connectée aux plots D+ ou D- et le DPLL se verrouille de manière que l'horloge, ainsi précisément générée soit compatible avec le débit des données transmises et de manière qu'elle permette alors un décodage des trames de données transmises. Un multiplieur de fréquence interne à la carte est avantageusement utilisé.

Ainsi, les fraudes par analyse de signature électrique sont rendues plus complexes, puisqu'elles exigent un contrôle externe de l'horloge via le plot CLK, ce qui n'est pas permis avec des données transmises via les plots D+ et D-.

On comprend que ces avantages permettent à une carte selon l'invention d'effectuer des opérations de cryptage ou décryptage dit à la volée et à haut débit par exemple dans des applications de télévision à péage ou dans d'autres applications, notamment relatives au cryptage d'information dans un réseau.

On notera que, dans un mode de mise en oeuvre de l'invention, les cartes sont en outre susceptibles de fonctionner selon les protocoles asynchrones par exemple T=0 et T=1 définis dans la partie 3 de la norme ISO 7816 en utilisant alors le plot I/O pour l'entrée et la sortie des signaux de données, le plot RST pour la réinitialisation de la puce, le plot CLK pour pouvoir la puce d'un signal d'horloge et, éventuellement, le plot VPP qui pourvoit la puce en tension de programmation. De telles cartes pourront de ce fait être utilisées avec un lecteur de l'état de la technique, ce dernier effectuant une conversion de protocole et un reformatage des données USB/ISO.

On notera par ailleurs que la transmission des données selon les protocoles USB et ISO peut être simultanée, la CPU gérant à la fois les données transmises via le plot I/O et les données transmises via les plots D+ et D-.

De manière à utiliser les fonctionnalités USB des cartes selon l'invention, les lecteurs, tels que schématisés aux figures 3 et 4 comportent au moins des moyens de connexion aux plages C1, C5, C4 et C8 de la carte électriquement connectées aux plots VCC, GND, D+ et D- de la puce 9.

Si, comme dans le cas de la figure 3, lesdits lecteurs 2 comportent uniquement des moyens dé connexion aux plages C1, C5, C4 et C8 de la carte, ces lecteurs 2 sont en définitive réduits à un simple connecteur électrique de transmission des données, de l'alimentation et de la masse, ce qui diminue considérablement leur prix de revient.

Si, par contre, lesdits lecteurs 2 sont en outre destinés à la lecture de cartes selon la norme ISO 7816, ils comportent alors en outre des moyens de connexion aux plages C6, C3, C2 et C7 de la carte électriquement connectées aux plots RST, VPP, I/O et CLK de la puce et sont munis d'une interface adéquate de conversion du format des données et d'utilisation des protocoles de la partie 3 de la norme ISO 7816. La sélection du mode de fonctionnement USB ou ISO 7816-3 s'effectue alors mécaniquement ou électriquement. Ces lecteurs sont alors aptes à lire un parc hétérogène de cartes : les cartes disposant uniquement des modalités de fonctionnement de la norme ISO, celles disposant uniquement de l'interface USB ainsi que celles disposant des deux fonctionnalités.

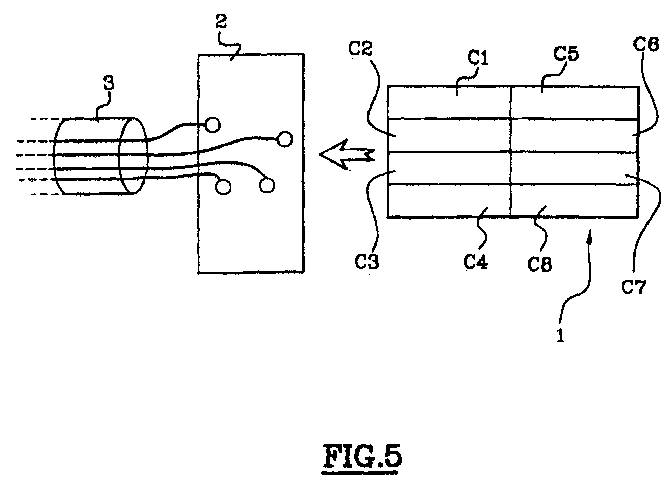

Dans un mode de réalisation particulièrement avantageux schématisé à la figure 5, le connecteur d'un lecteur de carte selon l'invention est réalisé de manière que la séquence de connexion s'effectue mécaniquement de la manière suivante au cours de l'insertion de la carte : dans un premier temps, connexion de la plage C5, puis, connexion des plages C4 et C8 et, dans un dernier temps, connexion des plages C 1 pour l'alimentation de la puce.

Dans un autre mode de réalisation de l'invention, six plages de contact de la carte seulement sont utilisées. En mode de fonctionnement USB, les plages VCC, GND, D+ et D- sont respectivement les plages C1, C5, C3 et C7 connectées respectivement aux plots VCC, GND CLK et I/O de la puce. En mode ISO, les plages VCC, GND, RST, VPO, CLK et I/ O sont respectivement les plages C1, C5, C2, C6, C3 et C7 connectées respectivement aux plots VCC, GND, RST, VPP, CLK et I/O. Aussi, selon l'invention, les plots de contact VCC, GND, D+ et D- sont connectés électriquement, respectivement à une première plage de contact C1, une seconde plage de contact C5, une troisième plage de contact C3 et à une quatrième plage de contact C7 d'un ensemble d'au moins six plages de contact C1, C2, C3, C5, C6 et C7. A noter que la connexion du plot VPP à la plage C7 reste, dans tous les modes de réalisation, facultative.

## Revendications

1. Objet portatif du type carte à puce comprenant, d'une part, un corps d'objet et, d'autre part, une puce à circuits intégrés (9), ladite puce à circuits intégrés (9) comportant une unité centrale de traitement (CPU) connectée, par l'intermédiaire de bus de données et d'adresses, à des mémoires (ROM, RAM, EEPROM), et comportant en outre au moins un premier plot de contact (VCC) apte à pouvoir la puce (9) en tension d'alimentation, un second plot de contact (GND) apte à assurer une mise à la masse de la puce (9), un troisième plot de contact (D+) et un quatrième plot de contact (D-), lesdits plots de contact (VCC, GND, D+, D-) étant connectés électriquement, respectivement, à une première plage de contact (C1), une seconde plage de contact (C5), une troisième plage de contact (C4) et à une quatrième plage de contact (C8) d'un ensemble d'au moins six plages de contact (C1, C2, C3, C4, C5, C6, C7, C8) affleurantes à la surface du corps d'objet, ledit objet portatif étant **caractérisé en ce que** le troisième (D+) et le quatrième (D-) plots de contact, connectés à une interface de la puce (9), constituent une paire différentielle et sont aptes à assurer une transmission bidirectionnelle de données gérées par l'unité centrale de traitement (CPU).

2. Objet portatif selon la revendication 1, **caractérisé en ce qu'**il est apte à communiquer avec le monde extérieur au moyen uniquement desdits premier (VCC), second (GND), troisième (D+) et quatrième(D-) plots de contact.

3. Objet portatif selon l'une des revendications 1 ou 2, **caractérisé en ce que** lés troisième (D+) et quatrième (D-) plots sont aptes à assurer une transmission des données selon des protocoles définis dans la norme bus universel série (USB).

4. Objet portatif selon l'une des revendications 1 à 3, **caractérisé en ce que** la puce (9) comporte en outre un cinquième plot de contact (VPP), un sixième plot de contact (RST) apte à assurer une réinitialisation de la puce (9), un septième plot de contact (CLK) apte à pouvoir la puce d'un signal d'horloge et un huitième plot de contact (I/O) apte à assurer une entrée et une sortie de signaux de données selon un protocole asynchrone, lesdits sixième, septième et huitième plots de contact (RST, CLK, I/O) étant connectés électriquement, respectivement, à une sixième plage de contact (C2), une septième plage de contact (C3) et à une huitième plage de contact (C7) de l'ensemble d'au moins huit plages de contact affleurantes à la surface du corps d'objet.

5. Objet portatif selon la revendication 4, **caractérisé en ce que** le protocole est un protocole défini dans la norme ISO 7816.

6. Lecteur (2) d'objet portatif selon l'une de revendications 1 à 5, **caractérisé en ce qu'**il comporte un premier moyen de connexion à la première (C1), seconde (C5), troisième (C4) et quatrième (C8) plages de contact et un deuxième moyen de connexion à un port (5) du type USB afin de connecter électriquement le premier moyen de connexion aux contacts VCC, GND, D+ et D- du port du type USB.

7. Lecteur selon la revendication 6, **caractérisé en ce qu'**il est agencé pour réaliser une séquence de connexion au cours de l'insertion d'une carte en tant qu'objet portatif dans l'ordre suivant: dans un premier temps connexion à la seconde plage (C5), puis connexion des troisième et et quatrième plages (C4, C8) et, dans un dernier temps, connexion de la première plage (C1) l'alimentation de la puce.

8. Procédé de transmission de données à une puce à circuits intégrés (9) d'un objet portatif du type carte à puce comprenant un corps d'objet, ladite puce à circuits intégrés (9) comportant une unité centrale de traitement (CPU) connectée, par l'intermédiaire de bus de données et d'adresses, à des mémoires (ROM, RAM, EEPROM), et comportant en outre au moins un premier plot de contact (VCC) apte à pouvoir la puce en tension d'alimentation, un second plot de contact (GND) apte à assurer une mise à la masse de la puce (9), un troisième plot de contact (D+) et un quatrième plot de contact (D-), lesdits plots de contact (VCC, GND, D+, D-) étant connectés électriquement, respectivement, à une première plage de contact (C1), une seconde plage de contact (C5), une troisième plage de contact (C4) et à une quatrième plage de contact (C8) d'un ensemble d'au moins six plages de contact (C1, C2, C3, C4, C5, C6, C7, C8) affleurantes à la surface du corps d'objet, ledit procédé étant **caractérisé en ce que** les données, gérées par l'unité centrale de traitement (CPU), sont transmises de manière bidirectionnelle par les troisième (D+) et quatrième (D-) plots de contact constituant une paire différentielle et connectés à une interface de la puce (9).

9. Procédé selon la revendication 8, **caractérisé en ce que** la transmission des données par les troisième (D+) et quatrième (D-) plots est à l'alternat.

10. Procédé selon l'une des revendications 8 ou 9, **caractérisé en ce que**, pour le traitement des données transmises par le troisième (D+) et quatrième (D-) plots de contact, on génère une horloge de manière interne à la puce.

11. Procédé selon l'une des revendications 8 à 10, **caractérisé en ce que** les données sont transmises par les troisième (D+) et quatrième (D-) plots dé contact selon un protocole de communication synchrone.

12. Procédé selon l'une des revendications 8 à 11, **caractérisé en ce que** l'on assure une transmission des données selon des débits allant jusqu'à une valeur de l'ordre de 12 mégabits par seconde.

13. Procédé selon l'une des revendications 8 à 12, **caractérisé en ce que** la transmission des données est assurée selon des protocoles conformes à la norme bus universel série (USB).

14. Procédé selon l'une des revendications 8 à 13, **caractérisé en ce que**, pour la transmission des données par les troisième (D+) et quatrième (D-) plots, on connecte l'objet portatif à un connecteur d'un lecteur (2) de manière que, dans un premier temps, on effectue une connexion à la seconde plage de contact (C5) puis une connexion aux troisième et quatrième plages de contact (C4) et (C8) et, dans un dernier temps, une connexion à la première plage de contact (C1).

15. Procédé selon l'une des revendications 8 à 14, **caractérisé en ce qu'**un cinquième plot de contact (VPP), un sixième plot de contact (RST) assure une réinitialisation de la puce (9), un septième plot de contact (CLK) pourvoit la puce (9) d'un signal d'horloge et un huitième plot de contact (I/O) assure une entrée et une sortie de signaux de données selon un protocole asynchrone, lesdits sixième, septième et huitième plots de contact (RST, CLK, I/O) étant connectés électriquement, respectivement, à une sixième plage de contact (C2), une septième plage de contact (C3) et à une huitième plage de contact (C7) de l'ensemble d'au moins six plages de contact affleurantes à la surface du corps de carte.

16. Procédé selon la revendication 15, **caractérisé en ce que** le protocole est un protocole défini dans la norme ISO 7816.

## Patentansprüche

1. Tragbarer Gegenstand vom Typ einer Chipkarte mit einerseits einem Gegenstandskörper und andererseits einem Chip mit integrierten Schaltkreisen (9), wobei der besagte Chip mit integrierten Schaltkreisen (9) eine über Daten- und Adressenbusse mit Speichern (ROM, RAM, EEPROM) verbundene Zentraleinheit (CPU) umfasst sowie zudem mindestens eine erste zur Spannungsversorgung des Chips (9) fähige Kontaktstelle (VCC), eine zweite zur Erdung des Chips (9) fähige Kontaktstelle (GND), eine dritte Kontaktstelle (D+) und eine vierte Kontaktstelle (D-) umfasst, wobei diese Kontaktstellen (VCC, GND, D+, D-) elektrisch jeweils mit einer ersten Kontaktfläche (C1), einer zweiten Kontaktfläche (C5), einer dritten Kontaktfläche (C4) und einer vierten Kontaktfläche (C8) von insgesamt mindestens sechs in die Oberfläche des Gegenstandskörpers versenkten Kontaktflächen (C1, C2, C3, C4, C5, C6, C7, C8) verbunden sind, wobei dieser tragbare Gegenstand **dadurch gekennzeichnet ist, dass** die dritte (D+) und vierte (D-) Kontaktstelle, welche mit einer Schnittstelle des Chips (9) verbunden sind, ein Differentialpaar bilden und eine bidirektionale Übertragung von der Zentraleinheit (CPU) verwalteten Daten gewährleisten können.

2. Tragbarer Gegenstand nach Anspruch 1, **dadurch gekennzeichnet, dass** er mittels lediglich besagter erster (VCC), zweiter (GND), dritter (D+) und vierter (D-) Kontaktstelle zur Kommunikation mit der Außenwelt fähig ist.

3. Tragbarer Gegenstand nach einem der Ansprüche 1 oder 2, **dadurch gekennzeichnet, dass** die dritte (D+) und vierte (D-) Kontaktstelle fähig sind, eine Übertragung der Daten gemäß den in der USB-Norm definierten Protokollen zu gewährleisten.

4. Tragbarer Gegenstand nach einem der Ansprüche 1 bis 3, **dadurch gekennzeichnet, dass** der Chip (9) zudem eine fünfte Kontaktstelle (VPP), eine sechste zur Neuinitialisierung des Chips (9) fähige Kontaktstelle (RST), eine siebte zur Abgabe eines Taktsignals an den Chip fähige Kontaktstelle (CLK) und eine achte den Ein- und Ausgang der Datensignale gemäß einem asynchronen Protokoll gewährleistende Kontaktstelle (I/O) umfasst, wobei diese sechste, siebte und achte Kontaktstelle (RST, CLK, I/O) elektrisch jeweils mit einer sechsten Kontaktfläche (C2), einer siebten Kontaktfläche (C3) und einer achten Kontaktfläche (C7) einer Einheit von mindestens acht in die Oberfläche versenkten Kontaktflächen verbunden ist.

5. Tragbarer Gegenstand nach Anspruch 4, **dadurch gekennzeichnet, dass** das Protokoll ein in der Norm ISO 7816 definiertes Protokoll ist.

6. Leser (2) für einen tragbaren Gegenstand nach einem der Ansprüche 1 bis 5, **dadurch gekennzeichnet, dass** er ein erstes Verbindungsmittel zur ersten (C1), zweiten (C5), dritten (C4) und vierten (C8) Kontaktfläche und ein zweites Verbindungsmittel zu einer Schnittstelle (5) vom Typ USB umfasst, um das erste Verbindungsmittel elektrisch mit den Kontakten VCC, GND, D+ und D- der Schnittstelle vom Typ USB zu verbinden.

7. Leser nach Anspruch 6, **dadurch gekennzeichnet, dass** er während des Einschiebens einer Karte als tragbaren Gegenstand zur Herstellung einer Verbindungssequenz in folgender Reihenfolge angeordnet ist: als erstes Verbindung zur zweiten Kontaktfläche (C5), anschließend Verbindung der dritten und vierten Kontaktfläche (C4, C8) und zuletzt Verbindung der ersten Kontaktfläche (C1) zur Stromversorgung des Chips.

8. Verfahren für die Übertragung von Daten an einen Chip mit integrierten Schaltkreisen (9) eines tragbaren Gegenstands vom Typ einer Chipkarte mit einem Gegenstandskörper, wobei der Chip mit integrierten Schaltkreisen (9) eine über Daten- und Adressenbusse mit Speichern (ROM, RAM, EEPROM) verbundene Zentraleinheit (CPU) umfasst und zudem mindestens eine erste Kontaktstelle (VCC) zur Bereitstellung der Versorgungsspannung für den Chip, eine zweite zur Erdung des Chips (9) fähige Kontaktstelle (GND), eine dritte Kontaktstelle (D+) und eine vierte Kontaktstelle (D-), wobei diese Kontaktstellen (VCC, GND, D+, D-) elektrisch jeweils mit einer ersten Kontaktfläche (C1), einer zweiten Kontaktfläche (C5), einer dritten Kontaktfläche (C4) und einer vierten Kontaktfläche (C8) einer Einheit von mindestens sechs in die Oberfläche des Gegenstandskörpers versenkten Kontaktflächen (C1, C2, C3, C4, C5, C6, C7, C8) verbunden sind und dieses Verfahren **dadurch gekennzeichnet ist, dass** die von der Zentraleinheit (CPU) verwalteten Daten von der dritten (D+) und vierten (D-) Kontaktstelle bidirektional übertragen werden, welche Kontaktstellen ein Differentialpaar bilden und mit einer Schnittstelle des Chips (9) verbunden sind.

9. Verfahren nach Anspruch 8, **dadurch gekennzeichnet, dass** die Übertragung der Daten durch die dritte (D+) und vierte (D-) Kontaktstelle wechselseitig ist.

10. Verfahren nach einem der Ansprüche 8 oder 9, **dadurch gekennzeichnet, dass** zur Bearbeitung der von der dritten (D+) und vierten (D-) Kontaktstelle übertragenen Daten ein chipinterner Takt erzeugt wird.

11. Verfahren nach einem der Ansprüche 8 bis 10, **dadurch gekennzeichnet, dass** die Daten von der dritten (D+) und vierten (D-) Kontaktstelle gemäß einem synchronen Kommunikationsprotokoll übertragen werden.

12. Verfahren nach einem der Ansprüche 8 bis 11, **dadurch gekennzeichnet, dass** eine Übertragung der Daten mit Datenraten bis zu einer Größenordnung von 12 Megabit pro Sekunde gewährleistet wird.

13. Verfahren nach einem der Ansprüche 8 bis 12, **dadurch gekennzeichnet, dass** die Übertragung der Daten gemäß den der USB-Norm entsprechenden Protokollen gewährleistet wird.

14. Verfahren nach einem der Ansprüche 8 bis 13, **dadurch gekennzeichnet, dass** man zur Übertragung der Daten durch die dritte (D+) und vierte (D-) Kontaktstelle den tragbaren Gegenstand mit einem Steckverbinder eines Lesers (2) derart verbindet, dass zunächst eine Verbindung zur zweiten Kontaktfläche (C5), dann eine Verbindung zur dritten und vierten Kontaktfläche (C4) und (C8) und schließlich eine Verbindung zur ersten Kontaktfläche (C1) hergestellt wird.

15. Verfahren nach einem der Ansprüche 8 bis 14, **dadurch gekennzeichnet, dass** eine fünfte Kontaktstelle (VPP), eine sechste Kontaktstelle (RST) die Neuinitialisierung des Chips (9) gewährleistet, eine siebte Kontaktstelle (CLK) dem Chip (9) ein Taktsignal bereitstellt und eine achte Kontaktstelle (I/O) gemäß einem asynchronen Protokoll einen Einund Ausgang von Datensignalen gewährleistet, wobei die sechste, siebte und achte Kontaktstelle (RST, CLK, I/O) elektrisch jeweils mit einer sechsten Kontaktfläche (C2), einer siebten Kontaktfläche (C3) und einer achten Kontaktfläche (C7) der Einheit aus mindestens sechs in die Oberfläche des Kartenkörpers versenkten Kontaktflächen verbunden ist.

16. Verfahren nach Anspruch 15, **dadurch gekennzeichnet, dass** das Protokoll ein in der Norm ISO 7816 definiertes Protokoll ist.

## Claims

1. Portable object of type smartcard comprising an object body and an integrated circuit chip (9), said integrated circuit chip (9) including a central processing unit (CPU) connected via a data and address bus to memories (ROM, RAM, EEPROM) and also including at least a first contact element (VCC) to supply the chip (9) with power, a second contact element (GND) to ground the chip (9), a third contact element (D+) and a fourth contact element (D-), said contact elements (VCC, GND, D+, D-) being electrically connected, respectively, to a first contact pad (C1), a second contact pad (C5), a third contact pad (C4) and a fourth contact pad (C8) of a set of at least six contact pads (C1, C2, C3, C4, C5, C6, C7, C8) flush with the surface of the object body, said portable object being **characterised in that** the third contact element (D+) and the fourth contact element (D-), connected to an interface of the chip (9), form a differential pair and can carry out bi-directional transmission of data managed by the central processing unit (CPU).

2. Portable object according to claim 1, **characterised in that** it can communicate with the exterior world, using only said first (VCC), second (GND), third (D+) and fourth (D-) contact elements.

3. Portable object according to claim 1 or 2, **characterised in that** the third (D+) and fourth (D-) elements can transmit data according to the protocols defined in the Universal Serial Bus (USB) standard.

4. Portable object according to one of claims 1 to 3, **characterised in that** the chip (9) also includes a fifth contact element (VPP), a sixth contact element (RST) to reset the chip (9), a seventh contact element (CLK) to supply the chip with a clock signal and an eighth contact element (I/O) to input and output data signals according to an asynchronous protocol, said sixth, seventh and eighth contact elements (RST, CLK, I/O) being electrically connected, respectively, to a sixth contact pad (C2), a seventh contact pad (C3) and an eighth contact pad (C7) of the set of at least eight contact pads flush with the surface of the object body.

5. Portable object according to claim 4, **characterised in that** the protocol is a protocol defined in standard ISO 7816.

6. Reader (2) of a portable object according to one of claims 1 to 5, **characterised in that** it includes a first means of connection to the first (C1), second (C5), third (C4) and fourth (C8) contact pads and a second means of connection to a USB type port (5) in order to electrically connect the first means of connection to the contacts VCC, GND, D+ and D- of the USB type port.

7. Reader according to claim 6, **characterised in that** it is designed to carry out a connection sequence when inserting a card as portable object in the following order: firstly, connection to the second pad (C5), then connection to the third and fourth pads (C4, C8) and lastly, connection of the first pad (C1) to power the chip.

8. Method to transmit data to an integrated circuit chip (9) of a portable object of type smartcard comprising an object body, said integrated circuit chip (9) including a central processing unit (CPU) connected via the data and address bus, to memories (ROM, RAM, EEPROM), and also including at least a first contact element (VCC) to supply the chip with power, a second contact element (GND) to ground the chip (9), a third contact element (D+) and a fourth contact element (D-), said contact elements (VCC, GND, D+, D-) being electrically connected, respectively, to a first contact pad (C1), a second contact pad (C5), a third contact pad (C4) and a fourth contact pad (C8) of a set of at least six contact pads (C1, C2, C3, C4, C5, C6, C7, C8) flush with the surface of the object body, said method being **characterised in that** the data, managed by the central processing unit (CPU), is transmitted bidirectionally by the third (D+) and fourth (D-) contact elements forming a differential pair and connected to an interface of the chip (9).

9. Method according to claim 8, **characterised in that** the transmission of data by the third (D+) and fourth (D-) elements is carried out alternately.

10. Method according to claim 8 or 9, **characterised in that**, for the processing of the data transmitted by the third (D+) and fourth (D-) contact elements, a clock is generated inside the chip.

11. Method according to one of claims 8 to 10, **characterised in that** the data is transmitted by the third (D+) and fourth (D-) contact elements according to a synchronous communication protocol.

12. Method according to one of claims 8 to 11, **characterised in that** the data is transmitted at speeds of up to a value of approximately 12 megabits per seconds.

13. Method according to one of claims 8 to 12, **characterised in that** the data is transmitted according to protocols complying with the Universal Serial Bus (USB) standard.

14. Method according to one of claims 8 to 13, **characterised in that**, for the transmission of data by the third (D+) and fourth (D-) elements, the portable object is connected to a connector of a reader (2) so that, firstly, a connection is made to the second contact pad (C5) then a connection is made to the third and fourth contact pads (C4 and C8) and lastly a connection is made to the first contact pad (C1).

15. Method according to one of claims 8 to 14, **characterised in that** a fifth contact element (VPP), a sixth contact element (RST) resets the chip (9), a seventh contact element (CLK) supplies the chip (9) with a clock signal and an eighth contact element (I/O) inputs and outputs data signals according to an asynchronous protocol, said sixth, seventh and eighth contact elements (RST, CLK, I/O) being electrically connected, respectively, to a sixth contact pad (C2), a seventh contact pad (C3) and an eighth contact pad (C7) of the set of at least six contact pads flush with the surface of the card body.

16. Method according to claim 15, **characterised in that** the protocol is a protocol defined in standard ISO 7816.
